# EUROPÄISCHE PATENTSCHRIFT

(11) **EP 2 705 596 B1**
(45) Veröffentlichungstag und Bekanntmachung des Hinweises auf die Patenterteilung: **06.01.2016**
(21) Anmeldenummer: 12729015.3
(22) Anmeldetag: 24.05.2012
(51) Int. Cl.: H02K 55/00

(54) **ROTOR FÜR EINE ELEKTRISCHE MASCHINE UND ELEKTRISCHE MASCHINE**
ROTOR FOR AN ELECTRIC MACHINE AND ELECTRIC MACHINE
ROTOR POUR UN MOTEUR ÉLECTRIQUE ET MOTEUR ÉLECTRIQUE

(30) Priorität: 07.06.2011 DE 102011077054
(43) Veröffentlichungstag der Anmeldung: 12.03.2014
(73) Patentinhaber: Siemens Aktiengesellschaft, 80333 München (DE)
(72) Erfinder: KUMMETH, Peter, 91074 Herzogenaurach (DE); SCHMIDT, Heinz, 91096 Möhrendorf (DE)
(86) Internationale Anmeldenummer: PCT/EP2012/059673
(87) Internationale Veröffentlichungsnummer: WO 2012/168082

(56) Entgegenhaltungen:
- WO-A1-00/49703
- WO-A1-01/08173
- WO-A2-03/065767
- FR-A1- 2 392 527
- US-A- 4 987 674

## Beschreibung

Die Erfindung betrifft einen Rotor für eine elektrische Maschine sowie eine elektrische Maschine.

Der Rotor einer Synchronmaschine besitzt typischerweise einen ferromagnetischen Polkern, der eine aufwändige Form aufweist und damit hohe Fertigungskosten und einen hohen technischen Fertigungsaufwand verursacht. Die Form des Polkerns wird dabei üblicherweise durch die Anzahl der Pole des Rotors bestimmt. Der Polkern eines Rotors wird insofern für genau die Anzahl der Pole ausgelegt. Der Raum zwischen den Polen trägt in der Regel nicht zum Drehmoment bei.

Die Patentschrift US 4 987 674 A zeigt eine Rotoranordnung einer dynamo-elektrischen Maschine. Die Rotoranordnung umfasst einen zylindrischen supraleitenden Magneten.

Die Offenlegungsschrift WO 01/08173 A1 zeigt eine Rotoranordnung in einer Vierpoltopologie.

Die Offenlegungsschrift WO 00/49703 A1 zeigt eine supraleitende Maschine umfassend eine Statoranordnung und eine Rotoranordnung.

Die Offenlegungsschrift FR 2 392 527 A1 zeigt einen Rotor einer elektrischen Maschine.

Die Offenlegungsschrift WO 03/065767 A2 zeigt eine Vorrichtung zur Aufheizung von Kaltteilen großer thermischer Masse.

Die der Erfindung zugrunde liegende Aufgabe kann daher darin gesehen werden, einen Rotor mit einem Polkern anzugeben, welcher universell in elektrischen Maschinen mit unterschiedlicher Polzahl verwendet werden kann und gleichzeitig auf einfache Weise gekühlt werden kann.

Diese Aufgabe wird mittels des jeweiligen Gegenstands der Ansprüche 1 und 9 gelöst. Vorteilhafte Ausgestaltungen sind Gegenstand von jeweils abhängigen Unteransprüchen.

Nach einem Aspekt ist ein Rotor für eine elektrische Maschine bereitgestellt. Der Rotor umfasst einen Polkern, der einen kühlbaren magnetisierbaren Rotorabschnitt aus einem supraleitenden Material aufweist. Der Rotorabschnitt weist eine rotationssymmetrische Geometrie auf. Der Polkern ist als ein Zylinder gebildet, und der Rotorabschnitt ist umlaufend an einer Außenfläche des Zylinders angeordnet. Der Zylinder ist als ein Hohlzylinder zum Einbringen eines Kühlfluids in einen Innenraum des Hohlzylinders gebildet.

Gemäß einem weiteren Aspekt ist eine elektrische Maschine geschaffen. Die elektrische Maschine umfasst einen Rotor mit einem Polkern, der einen kühlbaren magnetisierbaren Rotorabschnitt aus einem supraleitenden Material aufweist. Der Rotorabschnitt weist eine rotationssymmetrische Geometrie auf. Der Polkern ist als ein Zylinder gebildet, und der Rotorabschnitt ist umlaufend an einer Außenfläche des Zylinders angeordnet. Der Zylinder ist als ein Hohlzylinder zum Einbringen eines Kühlfluids in einen Innenraum des Hohlzylinders gebildet. Ferner ist eine Magnetisierungseinrichtung vorgesehen, welche ausgebildet ist, einen magnetischen Fluss durch das supraleitende Material zu induzieren.

Die Erfindung umfasst also den Gedanken, einen Rotorabschnitt eines Polkerns aus einem supraleitenden Material vorzusehen. Mittels der Magnetisierungseinrichtung kann ein magnetischer Fluss durch das supraleitende Material induziert werden. Es bildet sich insofern ein magnetischer Fluss durch das supraleitende Material aus. Der Rotorabschnitt wird also aufmagnetisiert. Dadurch, dass der Rotorabschnitt kühlbar ist, ist es in vorteilhafter Weise ermöglicht, das supraleitende Material auf eine Temperatur unterhalb der kritischen Temperatur des supraleitenden Materials abzukühlen. Dieses Abkühlen bewirkt in vorteilhafter Weise, dass der magnetische Fluss in dem supraleitenden Material verankert wird. Der magnetische Fluss wird sozusagen eingefroren. Das Verankern kann insbesondere auch als ein Verpinnen bezeichnet werden. Der Rotorabschnitt kann insofern in vorteilhafter Weise insbesondere einen Pol eines Magnetfeldes bilden. Die kritische Temperatur kann auch als eine Sprungtemperatur bezeichnet werden und ist insbesondere die Temperatur, bei der im Fall eines Unterschreitens der elektrische Widerstand des supraleitenden Materials auf Null Ohm abfällt.

Selbst wenn jetzt die Magnetisierungseinrichtung abgeschaltet wird, so dass diese keinen magnetischen Fluss mehr in dem supraleitenden Material induziert, bleibt der verankerte magnetische Fluss in dem supraleitenden Material erhalten. Der Rotorabschnitt wurde somit in vorteilhafter Weise aufmagnetisiert.

Aufgrund der rotationssymmetrischen Geometrie des Rotorabschnitts hängt der magnetische Fluss bzw. das entsprechende Magnetfeld nicht von der Geometrie des Rotorabschnitts ab, sondern kann in vorteilhafter Weise frei von der Magnetisierungseinrichtung vorgegeben werden. Das sich bildende Rotormagnetfeld mit einer bestimmten Polzahl kann insofern frei eingestellt werden, da der Rotorabschnitt aufgrund seiner Rotationssymmetrie eine polzahlunabhängige Geometrie aufweist.

Ein rotationssymmetrischer Rotorabschnitt im Sinne der vorliegenden Erfindung bedeutet insbesondere, dass eine Drehung um jeden beliebigen Winkel um eine Achse, insbesondere um eine Symmetrieachse, den Rotorabschnitt auf sich selbst abbildet. Ein Rotorabschnitt mit einer rotationssymmetrischen Geometrie umfasst insbesondere auch eine kugelsymmetrische Geometrie oder auch eine zylindersymmetrische Geometrie. Der Rotorabschnitt kann beispielsweise als ein Rotationskörper gebildet sein. Ein Rotationskörper im Sinne der vorliegenden Erfindung ist insbesondere ein Körper, der durch Rotation einer erzeugenden Kurve um eine Rotationsachse gebildet wird. Die Kurve und die Achse liegen dabei in einer Ebene.

Der Rotor kann insbesondere auch als Läufer bezeichnet werden. Das supraleitende Material kann insbesondere auch als Bulksupraleiter bezeichnet werden. Ein Abschnitt kann insbesondere auch als ein Bereich bezeichnet werden und kennzeichnet insbesondere eine räumlich zusammenhängende Fläche.

Nach einer Ausführungsform kann die elektrische Maschine insbesondere als Synchronmaschine gebildet sein.

Nach einer Ausführungsform ist der Polkern aus einem magnetischen Material, insbesondere Eisen und/oder X₈Ni₉, oder einem nicht magnetischen bzw. unmagnetischen Material oder einer Kombination hiervon gebildet. Der Polkern kann insbesondere auch Kupfer als Material umfassen. Das Vorsehen eines magnetischen Materials bewirkt in vorteilhafter Weise insbesondere, dass ein Grundmagnetfeld erzeugt ist, auf welches dann mittels des magnetisierbaren Rotorabschnitts ein weiteres Magnetfeld aufgeprägt wird. Der Polkern ist insbesondere aus einem Metall gebildet bzw. umfasst ein Metall. Der Polkern kann beispielsweise auch aus Aluminium oder einer Aluminiumlegierung gebildet sein. Bei einem Polkern aus Kupfer kann vorzugsweise vorgesehen sein, dass der Polkern in einer ferromagnetischen Hülle angeordnet ist. Auf diese Hülle werden dann beispielsweise weitere Elemente wie beispielsweise Kopplungsschicht, Heizung, supraleitendes Material angeordnet.

Nach der erfindungsgemäßen Ausführungsform ist der Polkern als ein Zylinder gebildet, wobei der Rotorabschnitt umlaufend an einer Außenfläche, auch als Mantelfläche bezeichnet, des Zylinders angeordnet ist. Mit Zylinder ist hier insbesondere ein gerader Kreiszylinder, auch Drehzylinder genannt, gemeint, der beispielsweise durch Verschiebung eines Kreises durch eine Gerade durch den Kreismittelpunkt, die senkrecht zur Kreisebene liegt, gebildet wird. Ein Querschnitt des geraden Kreiszylinders senkrecht zu der Geraden weist somit eine Kreisform auf. Das Vorsehen eines solchen Zylinders als Polkern, wobei der Rotorabschnitt umlaufend an einer Außenfläche bzw. Mantelfläche des Zylinders angeordnet ist, weist insbesondere den Vorteil auf, dass ein solcher Rotationskörper besonders einfach herzustellen und zu bearbeiten ist. Der Rotorabschnitt kann insbesondere auf der gesamten Außenfläche des Zylinders angeordnet sein, was eine besonders effiziente Nutzung der Außenfläche bewirkt und ferner ein räumlich ausgedehntes Magnetfeld erzeugen kann. Es wird insbesondere eine optimale Nutzung der verfügbaren Fläche hinsichtlich großen Drehmoments der elektrischen Maschine bewirkt. Die Außenfläche kann also insbesondere komplett durch den Rotorabschnitt bedeckt sein. Vorzugsweise kann auch vorgesehen sein, dass der Rotorabschnitt nur an einem oder mehreren Teilabschnitten der Außenfläche angeordnet ist. Die Außenfläche ist also insbesondere nur teilweise durch den Rotorabschnitt bedeckt. Bei einer teilweisen Bedeckung wird in vorteilhafter Weise supraleitendes Material eingespart.

Gemäß der erfindungsgemäßen Ausführungsform ist der Zylinder als ein Hohlzylinder gebildet, so dass in einen Innenraum des Hohlzylinders ein Kühlfluid, beispielsweise flüssiger Stickstoff, flüssiges Neon oder flüssiges Helium, eingebracht werden kann, um den Polkern und damit auch das supraleitende Material in vorteilhafter Weise zu kühlen. Diese Art der Kühlung weist insbesondere den Vorteil auf, dass sie einfach durchzuführen ist. Ferner ist das Kühlfluid in direktem Kontakt mit dem Zylinder, was eine schnelle, effektive und effiziente Kühlung bewirkt. Ein Kühlfluid im Sinne der vorliegenden Erfindung kann insbesondere ein Kühlgas oder eine Kühlflüssigkeit sein.

Nach einer anderen Ausführungsform kann vorgesehen sein, dass zwischen dem Rotorabschnitt und der Außenfläche eine thermische Kopplungsschicht gebildet ist. Somit ist in vorteilhafter Weise eine genau definierte thermische Ankopplung des supraleitenden Materials an dem Polkern ermöglicht. Vorzugsweise weist die thermische Kopplungsschicht eine vorbestimmte thermische Leitfähigkeit auf, so dass eine Übertragung von thermischer Energie zwischen dem Polkern und dem Rotorabschnitt genau eingestellt werden kann. Beispielsweise kann der Rotorabschnitt thermisch schwach an dem Polkern gekoppelt sein. Das heißt insbesondere, dass eine Erwärmung des supraleitenden Materials nicht oder kaum zu einer Erwärmung des Polkerns führt. Beispielsweise kann vorgesehen sein, dass die thermische Kopplungsschicht eine thermische Diode umfasst, welche eine Übertragung von thermischer Energie im Wesentlichen nur in eine Richtung zulässt. Eine solche thermische Diode kann beispielsweise Diamant sein.

Gemäß einer Ausführungsform umfasst die thermische Kopplungsschicht Glasfaser. Glas weist beispielsweise im Vergleich zu Kupfer eine sehr geringe thermische Leitfähigkeit auf, so dadurch in vorteilhafter Weise eine schwache thermische Ankopplung bewirkt werden kann. Ferner weisen Glasfaser weiterhin den Vorteil auf, dass sie in der Regel alterungs- und witterungsbeständig, chemisch resistent und nicht brennbar sind, so dass eine zuverlässige und dauerhaft stabile thermische Kopplungsschicht gebildet ist.

In einer anderen Ausführungsform kann vorgesehen sein, dass die thermische Kopplungsschicht aus einer Glasfaserbandage gebildet ist. Eine solche Glasfaserbandage kann beispielsweise um den Zylinder gewickelt werden, beispielsweise nass gewickelt werden, das heißt insbesondere, dass die Glasfaserbandage im nassen Zustand beispielsweise mit Epoxydharz gewickelt wird und anschließend aushärten kann. Insbesondere kann vorgesehen sein, dass die Glasfaserbandage mittels eines Epoxydharz-Klebers an die Außenfläche geklebt ist. Die Glasfaserbandage weist insbesondere eine definierte Dicke auf. Das Ausbilden einer thermischen Kopplungsschicht mittels Wickeln einer Glasfaserbandage weist insbesondere den Vorteil auf, dass diese fest und in gutem thermischem Kontakt mit der Außenfläche des Zylinders an den Zylinder aufgetragen werden kann.

In einer weiteren Ausführungsform weist das supraleitende Material eine Schutzschicht gegen eine bei einer Rotation des Polkerns gebildeten Zentrifugalkraft auf. Dadurch ist in vorteilhafter Weise das supraleitende Material gegen die bei Rotation auftretende Kräfte geschützt. Beispielsweise kann eine nass gewickelte Glasbandage oder Glasfaserbandage als Schutzschicht vorgesehen sein. Diese wird insbesondere im nassen Zustand beispielsweise mit Epoxydharz um das supraleitende Material gewickelt und härtet aus, so dass eine stabile und feste Anordnung erzielt wird.

In noch einer anderen Ausführungsform kann vorgesehen sein, dass der Rotorabschnitt aus einer oder mehreren supraleitenden Kacheln gebildet ist. Die Kacheln können beispielsweise aufgeklebt sein, insbesondere mittels eines Epoxydharz-Klebers. Eine Kachel kann beispielsweise eine Vierecksform aufweisen und beispielsweise etwa 4 cm oder etwa 5 cm lang und etwa 4 cm oder etwa 5 cm breit sein. Die Kacheln können gleich oder unterschiedlich gebildet sein. Die genauen Maße hängen insbesondere von der Geometrie des Rotorkerns ab, so dass die obigen Bemaßungen lediglich als beispielhaft, nicht aber als einschränkend zu verstehen sind. Solche supraleitenden Kacheln weisen insbesondere den Vorteil auf, dass eine einfache Anbringung von supraleitenden Materialien auf den Polkern, beispielsweise der Außenfläche des Zylinders, bewirkt wird. Ferner kann eine einzelne Kachel beispielsweise bei Beschädigung einfach ausgetauscht werden, ohne dass dabei das gesamte supraleitende Material erneuert werden müsste.

Nach einer weiteren Ausführungsform ist auf dem supraleitenden Material eine Heizung angeordnet, welche das supraleitende Material zumindest auf eine Temperatur oberhalb der kritischen Temperatur erwärmen kann. Somit ist es insbesondere in vorteilhafter Weise ermöglicht, einen bereits unterhalb der kritischen Temperatur abgekühlten Rotorabschnitt wieder soweit ausreichend zu erwärmen, dass ein Durchdringen von magnetischen Fluss durch das supraleitende Material ermöglicht ist, so dass sich als Folge ein entsprechendes Rotormagnetfeld ausbildet. So kann beispielsweise in vorteilhafter Weise auch während des Betriebs der elektrischen Maschine das Rotormagnetfeld erneuert oder verändert werden, wobei hierzu insbesondere eine Rotation des Rotors gestoppt wird. Ferner kann so auch nachträglich eine Polzahl der Maschine verändert werden.

Gemäß einer Ausführungsform kann die Heizung als eine Heizfolie gebildet sein, welche insbesondere auf das supraleitende Material geklebt ist, beispielsweise mittels eines Epoxydharz-Klebers. Das Vorsehen einer Heizfolie hat insbesondere den Vorteil, dass dadurch in einfacher Weise auch eine große Oberfläche des supraleitenden Materials erwärmt werden kann.

In einer Ausführungsform umfasst die Magnetisierungseinrichtung zumindest eine mittels eines elektrischen Stroms bestrombare Magnetisierungsspule. Eine solche Magnetisierungsspule kann beispielsweise im Rotor angeordnet sein, beispielsweise kann eine Wicklung einer solchen Spule um das supraleitende Material und/oder um den Zylinder, gewickelt sein. Die Magnetisierungsspule kann aber auch extern von dem Rotor angeordnet sein. Das Vorsehen einer Magnetisierungsspule weist insbesondere den Vorteil auf, dass ein magnetischer Fluss durch das supraleitenden Material unabhängig von einem Betrieb der elektrischen Maschine erzeugt werden kann, da im Betrieb der elektrischen Maschine, einzelne Spulen der Maschine dafür in der Regel nicht verwendet werden können.

Gemäß einer anderen Ausführungsform umfasst die Magnetisierungseinrichtung eine Statorwicklung eines Stators. Insbesondere kann die Magnetisierungseinrichtung mehrere Statorwicklungen des Stators umfassen. Der Stator kann insbesondere auch als Ständer bezeichnet werden. Somit wird in vorteilhafter Weise eine bereits vorhandene Wicklung eines Stators, welcher insbesondere allgemein von der elektrischen Maschine umfasst sein kann, verwendet, um einen magnetischen Fluss in dem supraleitenden Material zu induzieren. In diesem Fall kann beispielsweise auf weitere zusätzliche Magnetisierungsspulen verzichtet werden, was Kosten und einen technischen Fertigungsaufwand einspart. Der Stator kann insbesondere mehrere Wicklungen umfassen, welche einzeln oder gemeinsam bestromt werden können. Die Statorwicklungen können beispielsweise aus einem supraleitenden Material gebildet sein, so dass bei entsprechender Kühlung der Wicklungen unterhalb der Sprungtemperatur ein besonders verlustarmer Betrieb der elektrischen Maschine ermöglicht ist.

In einer weiteren Ausführungsform kann zur Bestromung des Stators, insbesondere der Wicklungen, und/oder zur Bestromung der Magnetisierungsspule eine DC-Stromquelle vorgesehen sein. DC steht hierbei für "Direct Current", also Gleichstrom.

Gemäß einer Ausführungsform kann das supraleitende Material beispielsweise ein Hochtemperatur-supraleitendes (HT_{C}S) Material sein, wobei T_{C} für die kritische Temperatur steht. Im Folgenden wird für HT_{C}S auch einfach nur HTS verwendet. Das supraleitende Material kann beispielsweise YBa₂Cu₃O₇, Bi₂Sr₂CaCuO₈, (BiPb)₂Sr₂Ca₂Cu₃O₁₀, SmBaCuO, GdBaCuO, YBaCuO oder Magnesiumdiborid sein. Bei einem HTS-Material kann die kritische Temperatur beispielsweise gleich oder größer 23 K betragen.

In einer weiteren Ausführungsform können auch mehrere Rotorabschnitte aus einem supraleitenden Material gebildet sein. Beispielsweise sind die Rotorabschnitte gleich oder unterschiedlich gebildet.

Nach einer anderen Ausführungsform kann vorgesehen sein, dass der Rotor in einem Kryostaten für eine thermische Isolierung angeordnet ist. Somit kann in vorteilhafter Weise eine besonders effiziente und sparsame Kühlung des Rotors bewirkt werden. Insbesondere kann der Kryostat evakuiert sein. Vorzugsweise ist der Kryostat als Teil des Rotors gebildet bzw. von diesem umfasst, so dass er mit dem Rotor mitrotieren kann.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Hierbei zeigen
- Fig. 1: einen Rotor,
- Fig. 2: eine elektrische Maschine und
- Fig. 3: eine Schnittansicht durch einen anderen Rotor.

Im Folgenden werden für gleiche Merkmale gleiche Bezugszeichen verwendet.

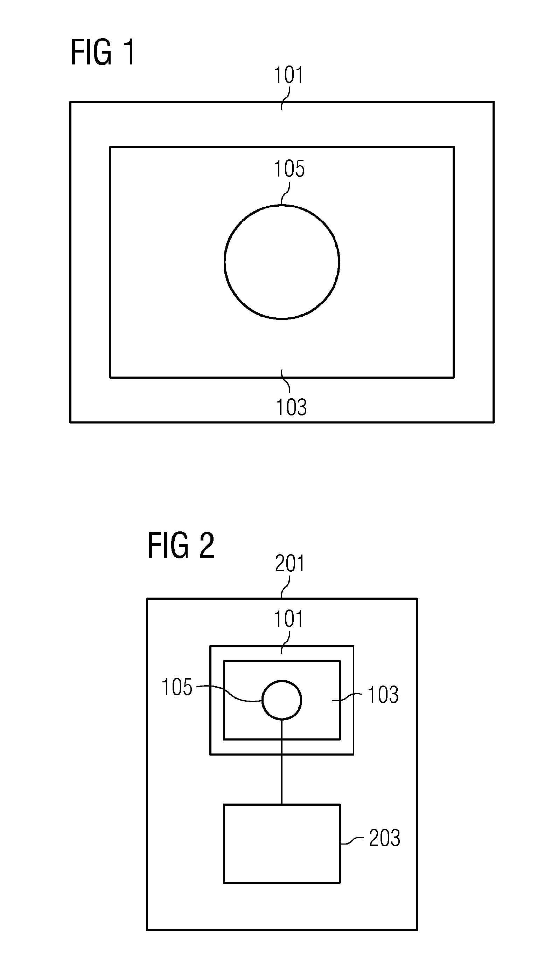

Fig. 1 zeigt einen Rotor 101 für eine elektrische Maschine (nicht gezeigt). Der Rotor 101 umfasst einen Polkern 103, der einen kühlbaren magnetisierbaren Rotorabschnitt 105 aus einem supraleitenden Material umfasst, der eine rotationssymmetrische Geometrie aufweist. Der Rotorabschnitt 105 kann insofern auch als ein rotationssymmetrischer Rotorabschnitt bezeichnet werden. Die rotationssymmetrische Geometrie des Rotorabschnitts 105 ist in Fig. 1 mittels eines Kreises dargestellt, wobei dies lediglich als exemplarisch und nicht als einschränkend zu verstehen ist. Beispielsweise kann der Rotorabschnitt auf einer Außenfläche eines geraden Kreiszylinders, insbesondere Hohlzylinders, umlaufend um die Mantelfläche gebildet sein, wobei der Kreiszylinder insbesondere den Polkern bildet.

Fig. 2 zeigt eine elektrische Maschine 201 umfassend den Rotor 101 aus Fig. 1. Die elektrische Maschine 201 weist ferner eine Magnetisierungseinrichtung 203 auf, welche einen magnetischen Fluss in dem supraleitenden Material des Rotorabschnitts 105 induzieren kann, so dass der Rotorabschnitt 105 in vorteilhafter Weise aufmagnetisiert wird.

Hierzu wird vorzugsweise der Rotorabschnitt 105, falls notwendig, auf eine Temperatur oberhalb der kritischen Temperatur des supraleitenden Materials erwärmt. Die Magnetisierungseinrichtung 203 induziert dann einen magnetischen Fluss in bzw. durch das supraleitende Material. Nachdem sich also ein magnetischer Fluss in bzw. durch das supraleitende Material ausgebildet hat, wird der Rotorabschnitt 105 auf eine Temperatur unterhalb der kritischen Temperatur abgekühlt, was in vorteilhafter Weise bewirkt, dass sich der magnetische Fluss in dem supraleitenden Material verankert. Der magnetische Fluss wird sozusagen eingefroren. Das heißt also insbesondere, dass selbst bei Abschaltung der Magnetisierungseinrichtung 203, der magnetische Fluss und damit das entsprechend gebildete Rotormagnetfeld erhalten bleiben.

Aufgrund der Rotationssymmetrie des Rotorabschnitts 105 weist das so verankerte Rotormagnetfeld ein Feldprofil auf, was nicht von der Geometrie des Rotorabschnitts 105 abhängt. Die Magnetisierungseinrichtung 203 kann insofern in vorteilhafter Weise ein bestimmtes Feldprofil frei vorgeben. Dadurch kann weiterhin in vorteilhafter Weise eine bestimmte Polzahl eingestellt werden.

In einer nicht gezeigten Ausführungsform umfasst die elektrische Maschine 201 einen Stator mit einer oder mehreren Statorwicklungen, wobei die Magnetisierungseinrichtung zumindest eine der Statorwicklungen bestromt, um den magnetischen Fluss in dem supraleitenden Material zu induzieren. Um die Statorwicklungen zu bestromen, ist vorzugsweise eine DC-Stromquelle vorgesehen.

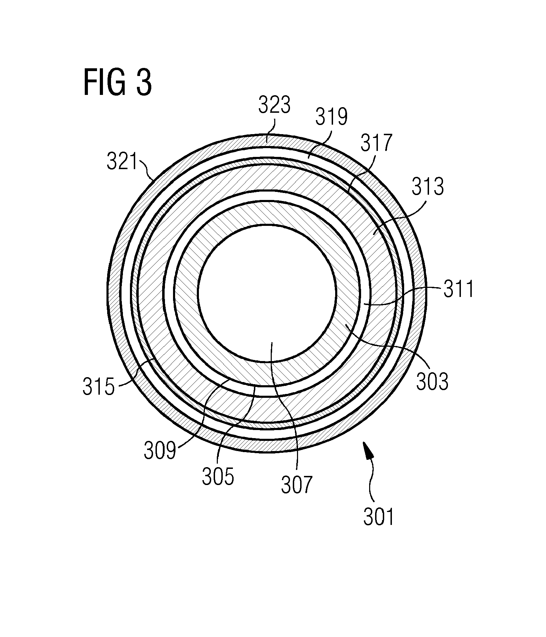

Fig. 3 zeigt eine Schnittansicht durch einen Rotor 301 für eine elektrische Maschine (nicht gezeigt). Der Rotor 301 umfasst einen Polkern 303 gebildet aus einem Hohlzylinder 305. Der Hohlzylinder 305 weist einen Hohlraum 307 bzw. Innenraum auf, welcher insbesondere ein Kühlfluid, beispielsweise flüssiges Neon, flüssiger Stickstoff oder flüssiges Helium, zur Kühlung des Hohlzylinders 305 aufnehmen kann. Auf einer Außenfläche 309 bzw. Mantelfläche des Hohlzylinders 305 ist eine mit Epoxydharz-Kleber nass gewickelte Glasfaserbandage 311 aufgebracht. Auf die Glasfaserbandage 311 ist ein supraleitendes Material 313 befestigt, beispielsweise mittels eines Epoxydharz-Klebers. Die Glasfaserbandage 311 bewirkt hierbei eine definierte, schwache thermische Ankopplung des supraleitenden Materials 313 an den Polkern 303. Das supraleitende Material 313 bildet einen Rotorabschnitt.

Gemäß einer nicht gezeigten Ausführungsform kann vorgesehen sein, dass das supraleitende Material 313 als supraleitende Kacheln auf die Glasfaserbandage 311 aufgebracht wird.

In dem Rotor 301 ist die gesamte Mantelfläche 309 des Hohlzylinders 305 mit dem supraleitenden Material 313, insbesondere den Kacheln, bedeckt, so dass in vorteilhafter Weise eine optimale Nutzung der verfügbaren Fläche hinsichtlich großen Drehmoments der elektrischen Maschine erreicht wird.

In einer nicht gezeigten Ausführungsform kann auch vorgesehen sein, dass die Mantelfläche 309 des Hohlzylinders 305 nur teilweise mit dem supraleitenden Material 313, insbesondere den Kacheln, bedeckt ist, wodurch in vorteilhafter Weise supraleitendes Material eingespart werden kann. Wichtig ist nur, dass das supraleitende Material 313 umlaufend um die Mantelfläche 309 gebildet ist, so dass der mittels des supraleitenden Materials 313 gebildete Rotorabschnitt eine rotationssymmetrische Geometrie aufweist.

Auf einer der Glasfaserbandage 311 abgewandten Seite 315 des supraleitenden Materials 313 ist eine Heizung 317 angeordnet, welche vorzugsweise als eine Heizfolie gebildet ist. Die Heizung 317 ist auf die Seite 315 aufgeklebt, beispielsweise mittels eines Epoxydharz-Klebers.

Um diese Anordnung ist eine nass gewickelte Glasbandage 319 angeordnet, welche in vorteilhafter Weise einen Schutz gegen eine bei Rotation auftretende Rotationskraft bewirkt.

Für eine thermische Isolierung des Rotors 301 ist ein Kryostat 321 mit einer doppelwandigen evakuierten Wandung 323 gebildet, wobei der Rotor 301 in dem Kryostaten 321 angeordnet ist. In einer nicht gezeigten Ausführungsform kann der Kryostat auch nur eine einfachwandige Wandung umfassen, wobei dann vorzugsweise ein Raum zwischen dem Rotor 301 und der Wandung des Kryostats evakuiert ist. In einer weiteren nicht gezeigten Ausführungsform kann die einfachwandige bzw. doppelwandige Wandung des Kryostats metallisch sein bzw. aus einem metallischen Material gebildet sein. Dadurch fallen in vorteilhafter Weise Wirbelstromverluste im rotierenden Kryostaten und nicht im supraleitenden Material 313 an.

In einer nicht gezeigten Ausführungsform ist der Hohlzylinder 305 als ein metallischer Hohlzylinder gebildet, so dass in vorteilhafter Weise Wirbelstromverluste in einer metallischen Wandung des Hohlzylinders und nicht in dem supraleitenden Material 313 anfallen. Der Hohlzylinder 305 kann vorzugsweise aus Kupfer gebildet sein, was aufgrund der guten thermischen Leitfähigkeit von Kupfer eine besonders effiziente und effektive Kühlung ermöglicht. Bei einem Hohlzylinder aus Kupfer kann vorzugsweise vorgesehen sein, dass dieser in einer ferromagnetischen Hülle angeordnet ist, auf welcher dann insbesondere die Glasfaserbandage 311 und die weiteren Elemente des Rotors 301 angeordnet bzw. aufgebracht sind.

Zusammenfassend umfasst die Erfindung insbesondere den Gedanken, einen Rotor mit einer polzahlunabhängigen Geometrie vorzusehen, was insbesondere durch eine rotationssymmetrische Anordnung des supraleitenden Materials erreicht wird. Insbesondere kann der Polkern ein Hohlzylinder sein, wobei die Mantelfläche des Hohlzylinders mit dem supraleitenden Material bedeckt ist, insbesondere in Form von supraleitenden Kacheln. Dieser universelle Rotoraufbau erlaubt somit in vorteilhafter Weise die Verwendung des Rotors in elektrischen Maschinen mit unterschiedlichen Polzahlen.

Weiterhin verringert sich dadurch der Fertigungsaufwand, was höhere Stückzahlen bewirkt, was letztlich zu deutlich reduzierten Fertigungskosten führt.

Der geringe Platzbedarf für die Pole des Rotors ermöglicht in vorteilhafter Weise den Bau von besonders schlanken Rotoren. Dadurch werden insbesondere in vorteilhafter Weise höhere Drehzahlen realisierbar.

Die mechanische Stabilisierung des Rotors für den Betrieb bei hohen Drehzahlen ist insbesondere durch eine Zylinderform bzw. zylindrische Form leicht und kostengünstig realisierbar.

Die Kühlung des Rotors wird bei einer Magnetisierung des Rotorabschnitts mittels Wicklungen, welche außerhalb des Rotors angeordnet sind, im Vergleich zu Rotoren, welche mittels einer zusätzlichen Spule aufmagnetisiert werden müssen bzw. welche mit HTS-Spulen, also Spulen aus einem HTS-Material, zur Aufmagnetisierung versehen sind, wesentlich vereinfacht, da keine solche zusätzliche Spule (mit potentieller Quenchgefahr) gekühlt werden muss. Es gibt auch keine entsprechenden Stromzuführungen, die thermisch abgefangen und gekühlt werden müssten.

Insbesondere wenn die gesamte Mantelfläche des hohlzylindrischen Polkerns mit einem supraleitenden Material, insbesondere supraleitenden Kacheln, belegt ist, wird in vorteilhafter Weise eine optimale Nutzung der verfügbaren Fläche hinsichtlich möglichst großem Drehmoment der elektrischen Maschine erreicht.

Beim Aufmagnetisieren des Rotorabschnitts kann dieser aufgrund seiner Rotationssymmetrie, insbesondere seiner Zylindersymmetrie, in jeder beliebigen Position stehen. Ein exaktes und insofern aufwendiges Positionieren entfällt, da keine Polpositionen durch die geometrische Form des Rotorabschnitts vorbestimmt sind.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

## Patentansprüche

1. Rotor (301) für eine elektrische Maschine (201), umfassend:
- einen Polkern (303) mit einem kühlbaren magnetisierbaren Rotorabschnitt (313) aus einem supraleitenden Material, wobei
- der Rotorabschnitt (313) eine rotationssymmetrische Geometrie aufweist,
- und wobei der Polkern (303) als ein Zylinder gebildet ist und der Rotorabschnitt (313) umlaufend an einer Außenfläche (309) des Zylinders angeordnet ist,
**dadurch gekennzeichnet, dass** der Zylinder als ein Hohlzylinder (305)zum Einbringen eines Kühlfluids in einen Innenraum (307) des Hohlzylinders (305) gebildet ist.

2. Rotor (301) nach Anspruch 1, wobei zwischen dem Rotorabschnitt (313) und der Außenfläche (309) eine thermische Kopplungsschicht gebildet ist.

3. Rotor (301) nach Anspruch 2, wobei die thermische Kopplungsschicht Glasfaser umfasst.

4. Rotor (301) nach Anspruch 3, wobei die thermische Kopplungsschicht aus einer Glasfaserbandage (311) gebildet ist.

5. Rotor (301) nach einem der vorherigen Ansprüche, wobei das supraleitende Material eine Schutzschicht gegen eine bei einer Rotation des Polkerns (303) gebildete Zentrifugalkraft aufweist.

6. Rotor (301) nach Anspruch 5, wobei die Schutzschicht als eine Glasbandage (319) gebildet ist.

7. Rotor (301) nach einem der vorherigen Ansprüche, wobei der Rotorabschnitt (313) aus einer oder mehreren supraleitenden Kacheln gebildet ist.

8. Rotor (301) nach einem der vorherigen Ansprüche, wobei auf dem supraleitenden Material eine Heizung (317) zum Erwärmen des supraleitenden Materials auf eine Temperatur oberhalb der kritischen Temperatur angeordnet ist.

9. Elektrische Maschine (201), umfassend:
- einen Rotor (301) nach einem der Ansprüche 1 bis 8 und
- eine Magnetisierungseinrichtung (203) zum Induzieren eines magnetischen Flusses durch das supraleitende Material.

10. Elektrische Maschine (201) nach Anspruch 9, wobei die Magnetisierungseinrichtung (203) zumindest eine mittels eines elektrischen Stroms bestrombare Magnetisierungsspule umfasst.

11. Elektrische Maschine (201) nach Anspruch 9 oder 10, wobei die Magnetisierungseinrichtung (203) eine oder mehrere Statorwicklungen eines Stators umfasst.

## Claims

1. Rotor (301) for an electric machine (201), comprising:
- a pole core (303) having a coolable magnetisable rotor section (313) made of a super-conducting material, wherein
- the rotor section (313) has a rotationally symmetric geometry,
- and wherein the pole core (303) is formed as a cylinder and the rotor section (313) is arranged on an outer surface (309) of the cylinder so as to be encircling
**characterised in that** the cylinder is formed as a hollow cylinder (305) for the introduction of a coolant into an interior (307) of the hollow cylinder (305).

2. Rotor (301) according to claim 1, wherein a thermal coupling layer is formed between the rotor section (313) and the outer surface (309).

3. Rotor (301) according to claim 2, wherein the thermal coupling layer includes glass fibres.

4. Rotor (301) according to claim 3, wherein the thermal coupling layer is formed from a glass fibre bandage (311).

5. Rotor (301) according to any one of the preceding claims, wherein the super-conducting material has a protective layer against centrifugal force formed during a rotation of the pole core (303).

6. Rotor (301) according to claim 5, wherein the protective layer is formed as a glass bandage (319).

7. Rotor (301) according to any one of the preceding claims, wherein the rotor section (313) is formed from one or more super-conducting tile(s).

8. Rotor (301) according to any one of the preceding claims, wherein a heater (317) is arranged on the super-conducting material to heat the super-conducting material to a temperature above the critical temperature.

9. Electric machine (201), comprising:
- a rotor (301) according to any one of claims 1 to 8, and
- a magnetising device (203) for inducing a magnetic flux through the super-conducting material.

10. Electric machine (201) according to claim 9, wherein the magnetising device (203) includes at least one magnetising coil energised by means of an electrical current.

11. Electric machine (201) according to claim 9 or 10, wherein the magnetising device (203) includes one or more stator winding(s).

## Revendications

1. Rotor (301) pour une machine (201) électrique, comprenant :
- un noyau (303) polaire ayant une partie (313) rotorique refroidissable, magnétisable et en un matériau supraconducteur, dans lequel
- la partie (313) rotorique a une géométrie de révolution
- et dans lequel le noyau (303) polaire est sous la forme d'un cylindre et la partie (313) rotorique est disposée sur une surface (309) extérieure du cylindre en en faisant le tour,
**caractérisé en ce que** le cylindre est sous la forme d'un cylindre (305) creux pour l'introduction d'un fluide de refroidissement dans un espace (307) intérieur du cylindre (305) creux.

2. Rotor (301) suivant la revendication 1, dans lequel une couche de couplage thermique est formée entre la partie (313) rotorique et la surface (309) extérieure.

3. Rotor (301) suivant la revendication 2, dans lequel la couche de couplage thermique comprend de la fibre de verre.

4. Rotor (301) suivant la revendication 3, dans lequel la couche de couplage thermique est formée d'un bandage (311) en fibre de verre.

5. Rotor (301) suivant l'une des revendications précédentes, dans lequel le matériau supraconducteur a une couche de protection vis-à-vis d'une force centrifuge qui se forme lors d'une rotation du noyau (303) polaire.

6. Rotor (301) suivant la revendication 5, dans lequel la couche de protection est sous la forme d'un bandage (319) en verre.

7. Rotor (301) suivant l'une des revendications précédentes, dans lequel la partie (313) rotorique est formée d'un ou de plusieurs carreaux supraconducteurs.

8. Rotor (301) suivant l'une des revendications précédentes, dans lequel, sur le matériau supraconducteur est mis un chauffage (317) pour porter le matériau supraconducteur à une température supérieure à la température critique.

9. Machine (201) électrique comprenant :
- un rotor (301) suivant l'une des revendications 1 à 8 et
- un dispositif (203) d'aimantation pour induire un flux magnétique dans le matériau supraconducteur.

10. Machine (201) électrique suivant la revendication 9, dans laquelle le dispositif (203) d'aimantation comprend au moins une bobine d'aimantation pouvant être alimentée en un courant électrique.

11. Machine (201) électrique suivant la revendication 9 ou 10, dans laquelle le dispositif (203) d'aimantation comprend un ou plusieurs enroulement d'un stator.
